# EUROPÄISCHE PATENTANMELDUNG

(11) **EP 1 093 246 A2**
(43) Veröffentlichungstag der Anmeldung: **18.04.2001**
(21) Anmeldenummer: 00122024.3
(22) Anmeldetag: 10.10.2000
(51) Int. Cl.: H04J 3/06, H04L 7/10

(54) **Verfahren zum Synchronisieren von Paketen**

(30) Priorität: 13.10.1999 DE 19949402
(71) Anmelder: SIEMENS AKTIENGESELLSCHAFT, 80333 München (DE)
(72) Erfinder: Graf, Jürgen, 82065 Baierbrunn (DE)

(57) **Zusammenfassung**

Die Verarbeitung von Paketen variabler Länge (z.B. IP-Pakete) erfordert, daß Byte- und Paketgrenzen sicher erkannt werden. Beim Stand der Technik wird hierzu jedem Paket eine Längeninformation des Paketes und eine Über die Länge gebildete Prüfinformation vorangestellt. Empfangsseitig werden diese Informationen bitweise überprüft, womit bei Vorliegen einer Übereinstimmung Synchronität gegeben ist. Um bei Verlust der Synchronität keine Neusynchronisierung vornehmen zu müssen, wird erfindungsgemäß eine erneute Überprüfung byteweise vorgenommen, um in den synchronen Zustand zurückkehren zu können.

## Beschreibung

Die Erfindung betrifft ein Verfahren gemäß dem Oberbegriff von Patentanspruch 1.

Werden byte-orientierte Datenpakete variabler (IP-Pakete) oder konstanter Länge über einen binären, bit-orientierten Kanal konstanter Bitrate übertragen, so müssen die Byte- und die Paketgrenzen sicher erkannt werden. Dadurch ist eine weitere Verarbeitung der Datenpakete erst möglich. Um die Dynamik des Übertragungsvorganges nicht zu beeinträchtigen, sollte dies zum einen möglichst schnell geschehen und zum anderen eine Fehlsynchronisation weitgehend vermieden werden.

Beim Stand der Technik wird jedes Paket innerhalb eines speziellen Rahmens übertragen. Dieser Rahmen beinhaltet unter anderem Informationen über die Länge der eingefügten Pakete oder die Lage der Paketgrenzen. Der Rahmen enthält damit eine Sequenz, mit der der Empfänger die Paketgrenzen wiederfinden kann. Diese Synchronisationssequenz kann unterschiedlich aufgebaut sein. Oft wird der Anfang des Rahmens durch ein Synchronisationsflag markiert. Eine andere Möglichkeit ist das Verwenden eines Fehlercodes. Mit ihm wird der Rahmen oder Teile des Rahmens codiert. Der Empfänger erkennt den Rahmen anhand eines korrekten Fehlercodes. Der Fehlercode FC (zur Fehlererkennung und Fehlerkorrektur) wird über die Länge des eingefügten Paketes gebildet und mitübertragen.

Anhand des korrekten Fehlercodes FC erkennt der Empfänger einen möglichen Rahmenanfang. Die mitübertragene Paketlänge L zeigt auf den Anfang des nächsten Rahmens. Anhand des Fehlercodes FC können verfälschte Längen erkannt und gegebenenfalls korrigiert werden. Als Fehlercode kann beispielsweise ein CRC-Prüfverfahren (Cyclic Redundancy Check) oder ein anderes bekanntes Prüfverfahren (z.B. BIP) verwendet werden.

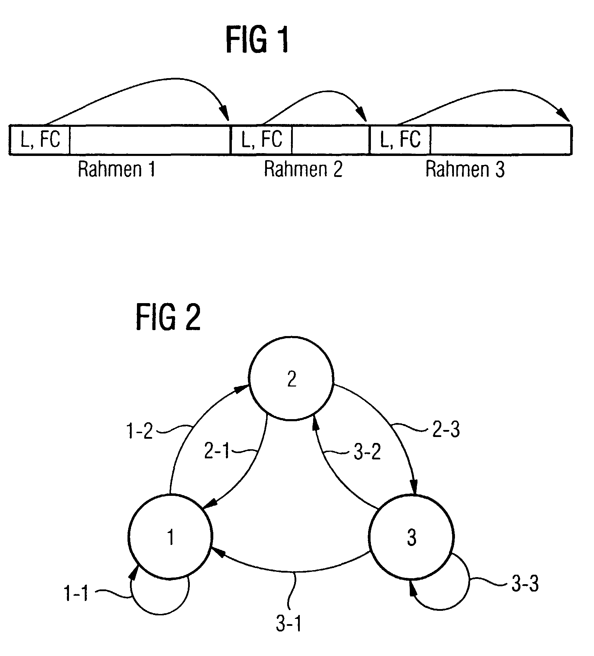

Dem Paket wird damit die Angabe über die Paketlänge L sowie der aus der Paketlänge berechnete Fehlercode FC vorangestellt. Damit ist ein Übertragungsrahmen definiert, der aus einer Paketlänge L, einem Fehlercode FC und dem Paket selbst besteht. Die entsprechenden Verhältnisse sind in Fig. 1 aufgezeigt.

Zur Synchronisierung wird in dem empfangsseitg aufgenommenen Datenstrom nach einem möglichen Rahmenanfang gesucht. Hierbei wird über die empfangenden Bits die Prüfung FC vorgenommen. Wird eine Sequenz gefunden, die zudem noch mit der im mitübertragenen FC Feld enthaltenen Sequenz übereinstimmt, wird dies als möglicher Rahmenanfang interpretiert. Zur Verifizierung dieser Interpretation wird zusätzlich überprüft, ob die dem Paket vorangestellte Information als Längenangabe zu interpretieren ist. Hierzu wird diese Information auf den möglichen Rahmenanfang beaufschlagt. Wird erneut ein Rahmenanfang gefunden, wird die Synchronisierung als gelungen angenommen, ansonsten muß erneut nach einem Rahmenanfang gesucht werden.

Zur Synchronisation wird bei diesem Stand der Technik eine Zustandsmaschine mit 3 Zuständen verwendet, wie sie in Fig. 2 aufgezeigt ist:
Zustand 1: Asynchroner Zustand; die Byte- und Rahmengrenzen sind nicht bekannt. Der Empfänger ist ausgerastet. Im empfangenen Bitstrom wird an jeder Stelle nach der Startsynchronisationssequenz gesucht.
Zustand 2: Presynchroner Zustand; eine Synchronisationssequenz (d.h. möglicher Rahmenanfang) wurde gefunden. An der erwarteten Stelle wird die nächste Synchronisationssequenz geprüft.
Zustand 3: Synchroner Zustand; der Empfänger ist eingerastet (Synchronisiert). Die Stelle des nächsten Rahmenanfangs ist bekannt. Dort wird die nächste Synchronisationssequenz gesucht.

Verliert der Empfänger die Rahmensynchronität, so muß wieder komplett neu aufsynchronisiert werden. Durch die Zustände 1 bis 3 werden Zustandsübergänge definiert:
Übergang 1-1: Es wurde keine Synchronisationssequenz gefunden (Längenfeld + FC).
Übergang 1-2: Es wurde eine gültige Synchronisationssequenz gefunden.
Übergang 2-1: An der erwarteten Stelle wurde eine ungültige Synchronisationssequenz gefunden.
Übergang 2-3: An der erwarteten Stelle wurde eine gültige Synchronisationssequenz gefunden.
Übergang 3-1: An der erwarteten Stelle wurde keine gültige Synchronisationssequenz gefunden. (Durch FC-Check wird erkannt, daß das Längenfeld Fehler aufweist, die nicht mehr korrigierbar sind.)
Übergang 3-2: An der erwarteten Stelle wurde eine Synchronisationssequenz mit einem korrigierbaren Fehler gefunden. Die Länge wurde korrigiert. Somit ist der Anfang des nächsten Rahmens mit einiger Wahrscheinlichkeit bekannt.
Übergang 3-3: An der erwarteten Stelle wurde eine gültige Synchronisationssequenz gefunden.

Problematisch an einer derartigen Vorgehensweise ist, daß im Falle von Bitfehlern im Längenfeld die Synchronität verloren geht. Bis eine neue Synchronität gefunden ist, vergeht viel Zeit bis der Zustand 3 wieder erreicht ist, womit die Dynamik des Übertragungsvorganges eingeschränkt ist.

Der Erfindung liegt die Aufgabe zugrunde, einen Weg aufzuzeigen, wie die Dynamik des Übertragungsvorganges trotz aufgetretener Bitfehler erhalten bleibt.

Die Erfindung wird ausgehend vom Oberbegriff von Patentanspruch 1 durch die im kennzeichnenden Teil angegebenen Merkmale gelöst.

Vorteilhaft an der Erfindung ist insbesondere, daß bei Verlust der Rahmensynchronität durch Bitfehler im Längenfeld die Bytesynchronität erhalten bleibt. Durch Verwendung der Bytegrenzen, die vor dem Verlust der Rahmensynchronität definiert und eingenommen war, werden damit viele zufällige Falschsynchronisationen vermieden. Die korrekte Rahmensynchronität wird somit schneller erkannt. Das bitweise Ermitteln der Synchronisationssequenz aus der Datenstruktur der Pakete entfällt somit und wird lediglich im Falle einer kompletten Neusynchronisierung durchgeführt. Da zum Erreichen einer Resynchronisierung das Ermitteln der Synchronisationssequenz byteweise durchgeführt wird, ist die Dynamik des Übertragungsvorganges trotz aufgetretener Bitfehler sichergestellt. Um eine schnelle Rahmensynchronisation nach deren Verlust zu gewährleisten, werden ferner oft mehrere parallel arbeitende, unabhängige Synchronisationsmaschinen eingesetzt.

Der Erfindung geht davon aus, daß bei der Übertragung mit dem oben beschriebenen Rahmenformat (variable Länge z.B.IP-Paket, Längenangabe L + Fehlercode FC) in den überwiegenden Fällen ein Verlust der Rahmensynchronität durch das Auftreten von Bitfehler zustande kommt. Das Auftreten eines Bitschlupfes ist dagegen sehr selten. In diesem Fall ist es vorteilhaft, die bereits einmal ermittelte Bytesynchronität beizubehalten und lediglich die möglichen Rahmenanfangsgrenzen zu berücksichtigen, die bytesynchron zu den vorherigen Rahmenanfangsgrenzen sind. Dadurch wird eine zufällige Fehlsynchronisation mit anderen Bytegrenzen vermieden. Erst wenn es nicht gelingt mit diesen Bytegrenzen (innerhalb einer bestimmten Zeit/ Anzahl von Bytes) aufzusynchronisieren, ist ein Bitschlupf wahrscheinlich. Erst dann wird die Bytesynchronität aufgegeben und vollständig neu synchronisiert.

Vorteilhafte Weiterbildungen der Erfindung sind in den Unteransprüchen angegeben.

Die Erfindung wird im folgenden anhand eines figürlich dargestellten Ausführungsbeispieles näher erläutert.

Es zeigen:
- Fig 1: die typische Rahmenstruktur eines Übertragungsrahmens, in dem Pakete eingebunden sind,
- Fig 2: das Auffinden der Synchronisationssequenz mit einer 3 stufigen Zustandsmaschine,
- Fig 3: ein Fallbeispiel, in dem von einem unkorrekten Rahmenanfang ausgegangen wird,
- Fig 4: ein empfangsseitig angeordnetes Blockschaltbild,
- Fig 5: den erfindungsgemäßen Algorithmus als Flußdiagramm
- Fig 6: die 5-stufige Zustandsmaschine

In Fig. 1 ist eine typische Rahmenstruktur aufgezeigt, in der Pakete während des Übertragungsvorganges eingebunden sind. Den Paketen, die gemäß vorliegendem Ausführungsbeispiel als IP-Pakete (Internet Protocol) ausgebildet sein sollen, werden in einem Rahmenkopf Informationen bezüglich der Paketlänge L und eines Fehlercodes FC vorangestellt.

Fig. 2 zeigt den Synchronisierungsvorgang gemäß dem Stand der Technik anhand einer 3-stufigen Zustandsmaschine mit 3 Zuständen und 7 Zustandsübergängen.

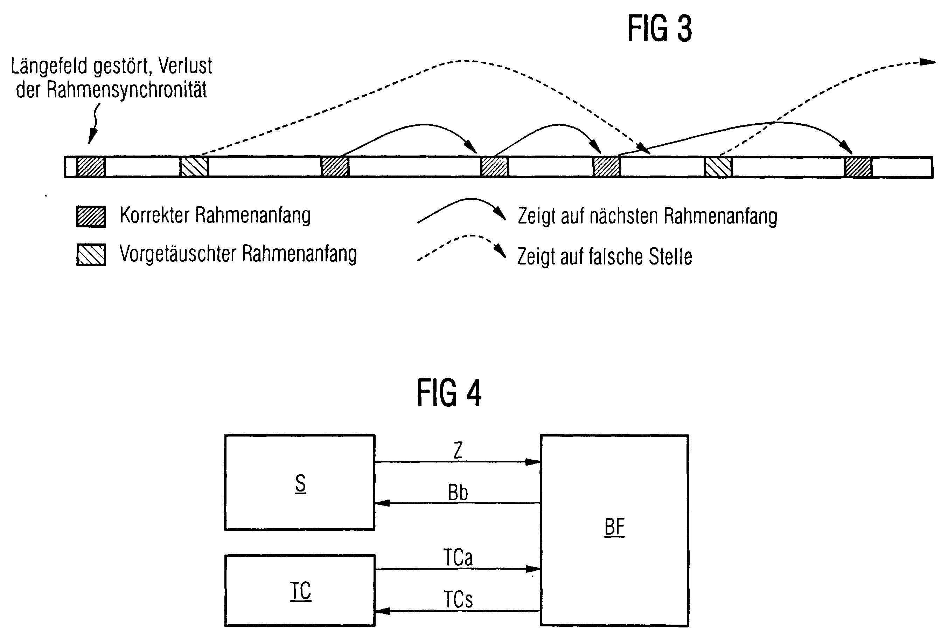

Fig. 3 zeigt ein Fallbeispiel, in dem von einem Bitfehler in der Längenangabe ausgegangen wird. In diesem Fall geht die Rahmensynchronität verloren, da die Längenangabe L nicht mehr auf den nächsten Rahmenanfang zeigt. Das Wiederaufsynchronisieren kann aufgrund des Bitfehlers nun zu verschiedenen Problemen führen. So können beispielsweise überall im Datenstrom zufällige Bitmuster auftreten, die einen Rahmenanfang vortäuschen. In einem exakt rahmensynchronen Zustand haben diese scheinbaren Rahmenanfangsgrenzen keinerlei Einfluß.Ist allerdings die Rahmensynchronität verloren, so wird der Empfänger versuchen, sich auf diese Bitmuster aufzusynchronisieren. Ein falscher Rahmenanfang wird aber erst dann bemerkt, wenn durch Beaufschlagung mit der Paketlänge L an der erwarteten Stelle kein weiterer Rahmenanfang vorgefunden wird.

In dem Datenstrom sind auch korrekte Rahmenanfangsgrenzen vorhanden, sie werden jedoch, da sich der Empfänger auf ein zufälliges Bitmuster bereits aufsynchronisiert hat, nicht unmittelbar bemerkt.Dadurch wird der gesamte Synchronisierungsprozeß verzögert. Wurde der Verlust der Rahmensynchronität durch Bitfehler im Längenfeld des Rahmens ausgelöst, so ist kein Bitschlupf aufgetreten. Der nächste Rahmenanfang kann daher nur mit derselben Bytegrenze auftreten. Werden zumindest für eine gewisse Zeit (oder Anzahl von Bytes) die anderen Bytegrenzen für die Synchronisation gesperrt, so werden alle Fehlsynchronisationsversuche mit falschen Bytegrenzen vermieden.Damit auch beim Auftreten eines Bitschlupfes trotzdem wieder aufsynchronisiert wird, dürfen die Bytegrenzen nur für eine bestimmte Zeit/ Anzahl von Bits festgeklemmt werden.

Gemäß Fig. 4 ist ein empfangsseitg angeordnetes Blockschaltbild aufgezeigt. Demgemäß sind insgesamt 3 miteinander in Wirkverbindung stehende Einrichtungen vorgesehen. Eine der Einrichtungen ist als Synchronisationsmaschine S ausgebildet. Darin sind die erforderlichen Einrichtungen zum Erkennen der Rahmengrenzen enthalten. Diese empfängt von einer der 3 weiteren Einrichtungen, die als Freigabeeinrichtung BF ausgebildet ist, ein Signal Bb. Hierbei handelt es sich um das Signal 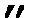 Bytegrenzen beibehalten", das die Beibehaltung der gefundenen Bytelage bewirkt. Erst wenn dieses Signal nicht mehr aktiv ist, werden für die Synchronisation auch die anderen Bytelagen verwendet. Der Zustand der Synchronisationsmaschine S wird stets der Freigabeeinrichtung BF mitgeteilt.

Die Freigabeeinrichtung BF erhält somit stets den aktuellen Zustand Z der Synchronisationsmaschine S als Eingangsinformation. Erreicht die Synchronisationsmaschine S Rahmensynchronität, so wird das Signal Bb (Bytelage beibehalten) aktiv. Verliert die Synchronisationsmaschine S die Rahmensynchronität, wird die dritte der 3 Einrichtungen, die Einrichtung TC gestartet. Sie ist als Timer/Counter ausgebildet. Falls der Timer abgelaufen ist, bevor die Rahmensynchronität wieder erreicht worden ist, wird das Signal Bb (Bytelage beibehalten) inaktiv.

Die Einrichtung TC wird durch ein Signal TCs (Timer/Counter) starten" auf den Anfangswert gesetzt. Wird der Endwert erreicht, so wird ein Signal Tca an die Freigabeeinrichtung BF übermittelt. Ist der Timer/Counter TC abgelaufen, so ist von einem Bitschlupf auszugehen. Die Zeit-/Zählwert ist so zu wählen, daß die Synchronisationsmaschine S bei richtiger Bytelage vor Ablauf des Timer/Counter TC normalerweise wieder synchronisiert ist.

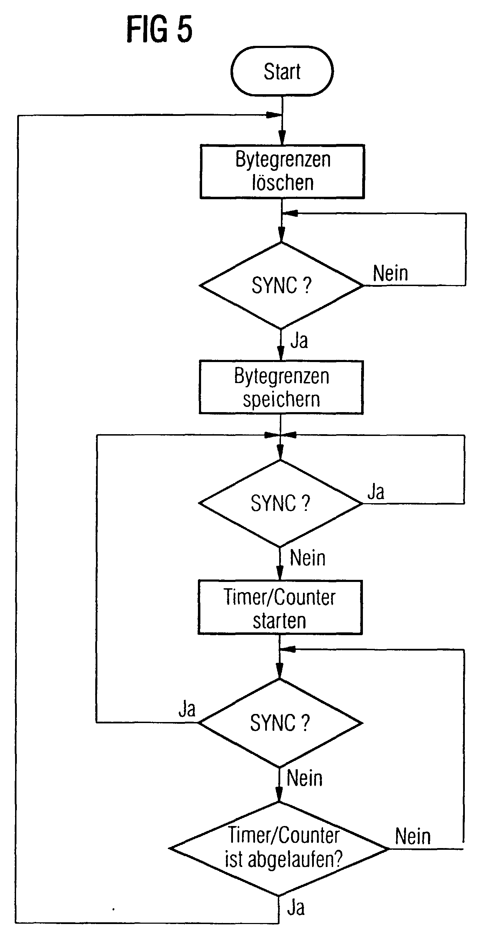

In Fig. 5 ist ein Flußdiagramm zum Auffinden der Synchronität aufgezeigt. Die Synchronisation kann endlich viele Zustände einnehmen (z.B. Asynchron, Presynchron, .. und SYNC) Mit SYNC sei der Zustand bezeichnet, in dem der Empfänger auf dem Rahmen sicher synchronisiert ist:

Zunächst werden alle 8 möglichen Bytegrenzen freigegeben (Block 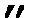 Bytegrenzen löschen"). Dies bedeutet, daß alle möglichen Bytegrenzen für den Synchronisationsprozeß erlaubt sind. Die Synchronisation synchronisiert sich selbstständig auf die empfangenen Rahmen auf. Hat die Synchronisation den Zustand SYNC erreicht (Abfrage 1 = ja), so werden die Bytegrenzen gespeichert (Bytelage festgeklemmt). Spätere Synchronisationsversuche geschehen (bis zur erneuten Freigabe der anderen Bytelagen) nur mit dieser Bytelage. Verläßt die Synchronisation den Zustand SYNC (Abfrage 2 = Nein), wird ein Counter oder Timer gestartet. (Der Timer ermittelt die Zeit, die man nicht im SYNC-Zustand ist, der Counter die Anzahl von Bytes oder Bits). Überschreitet der Timer oder Counter den maximal erlaubten Wert, so ist von einem Bitschlupf auszugehen (Abtrage 4 = ja, Abfrage 3 = Nein). Die erzwungene Beibehaltung der Bytelage wird aufgegeben. Alle Bytelagen sind für die Synchronisation wieder erlaubt.

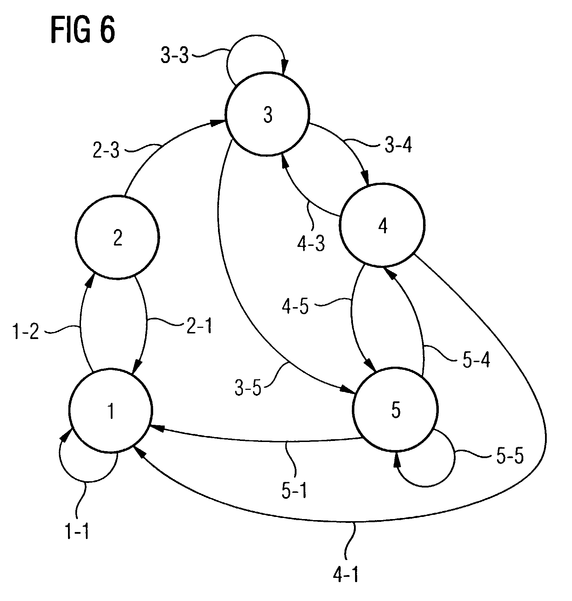

In Fig. 6 ist ein Zustandsdiagramm aufgezeigt. Insgesamt sind 5 Zustände vorhanden. Das Zustandsdiagramm gemäß des Standes der Technik aus Fig. 2 wird damit um die zwei Zustände 4 und 5 erweitert. Die Synchronisationssequenz beinhaltet Längenfeld L und Fehlercode FC, der über das Längenfeld L gebildet wird. Im Längenfeld L steht die Anzahl Bytes, die das eingetragene IP-Paket hat. Damit ist der Anfang des nächsten empfangenen Pakets bekannt. Das Zustandsdiagramm für die Synchronisation ergibt sich nun wie folgt:
Zustand 1: Byte-Asynchroner Zustand; die Byte- und Rahmengrenzen sind nicht bekannt. Der Empfänger ist ausgerastet, d.h. nicht synchronisiert. Im empfangenen Bitstrom wird an jeder Stelle nach der Startsynchronisationssequenz gesucht.
Zustand 2: Byte-Presynchroner Zustand; eine Synchronisationssequenz (d.h. möglicher Rahmenanfang) wurde gefunden. An der erwarteten Stelle wird nach der nächsten Synchronisationssequenz gesucht.
Zustand 3: Synchroner Zustand; der Empfänger ist eingerastet (Synchronisiert). Die Stelle des nächsten Rahmenanfangs ist bekannt.
Zustand 4: Rahmen-Presynchroner Zustand, eine Synchronisationssequenz (d.h. möglicher Rahmenanfang) wurde gefunden.
Zustand 5: Rahmen-Asynchroner Zustand; die Paketgrenzen sind nicht bekannt. In dem Datenstrom wird unter Beibehaltung der Bytegrenzen von Zustand 3 nach einer Synchronisationssequenz gesucht. Nur Synchronisationssequenzen mit gleicher Bytelage wie in Zustand 3 werden berücksichtigt. Hierzu ergeben sich folgende Zustandsübergänge:
   Übergang 1-1: Es wurde keine Synchronisationssequenz gefunden (beliebige Bytelage).
   Übergang 1-2: Es wurde eine gültige Synchronisationssequenz gefunden (beliebige Bytelage).
   Übergang 2-1: Es wurde keine gültige Synchronisationssequenz an der erwarteten Stelle gefunden.
   Übergang 2-3: An der erwarteten Stelle wurde eine gültige Synchronisationssequenz gefunden.
   Übergang 3-3: An der erwarteten Stelle wurde eine gültige Synchronisationssequenz gefunden.
   Übergang 3-4: An der erwarteten Stelle wurde eine Synchronisationssequenz mittels FC-Check mit einem korrigierbaren Fehler gefunden. Die Länge wurde korrigiert. Somit ist der Anfang des nächsten Rahmens mit einiger Wahrscheinlichkeit bekannt. Der Counter wird gestartet.
   Übergang 3-5: An der erwarteten Stelle wurde keine gültige Synchronisationssequenz gefunden. Durch FC-Check wird erkannt, daß das Längenfeld Fehler aufweist, die nicht korrigierbar sind. Der Counter wird gestartet.
   Übergang 4-1: Der Timer oder Counter ist abgelaufen.
   Übergang 4-3: An der erwarteten Stelle wurde eine gültige Synchronisationssequenz gefunden und der Timer/Counter ist nicht abgelaufen.
   Übergang 4-5: Es wurde keine gültige Synchronisationssequenz an der erwarteten Stelle gefunden und der Timer/Counter ist nicht abgelaufen.
   Übergang 5-1: Der Timer oder Counter ist abgelaufen.
   Übergang 5-4: Es wurde eine gültige Synchronisationssequenz gefunden (Bytelage wie in Zustand 3) und der Timer/Counter ist nicht abgelaufen.
   Übergang 5-5: Es wurde keine Synchronisationssequenz gefunden (Bytelage wie in Zustand 3) und der Timer/Counter ist nicht abgelaufen.

Bei den Übergängen 3-4 und 3-5 wird ein Timer oder Counter gestartet, der die Zeit oder Anzahl Bytes zählt, die innerhalb der Zustände 4 oder 5 verstreicht. Befindet sich der Empfänger einmal in den Zuständen 4 oder 5 und wechselt zu langsam wieder in den Zustand 3, so wird er in Zustand 1 versetzt. Die erlaubte Zeit bzw. Anzahl Bytes sollte so gewählt werden, daß unter normalen Umständen ein Wechsel in Zustand 3 vor einem Wechsel in Zustand 1 erfolgt. Zu großzügig sollte diese Zeit auch nicht bemessen werden, da andernfalls beim Auftreten eines Bitschlupfes der Synchronisierungsprozeß zu lange dauert (Bei einem Bitschlupf erfolgt eine Neusynchronisation nur in Zustand 1, alle Bytelagen werden berücksichtigt).

Die Erfindung ist natürlich nicht auf byteorientierte Rahmen beschränkt. Wäre der Rahmen immer um ein Vielfaches von Wörtern mit M Bits lang, so müßte anstatt der Bytes nach dem Verlust der Synchronität, diese Wortlage beibehalten werden. (Beispiel Wortlänge 32 Bit).

## Patentansprüche

1. Verfahren zum Synchronisieren von Paketen, die zwischen einer sendenden und einer empfangenden Einrichtung in einer Rahmenstruktur übertragen werden, wobei jedem Paket sendeseitig eine aus seiner Datenstruktur gewonnene Synchronisationssequenz mitgegeben wird, und wobei empfangsseitig aus dem ankommenden Bitstrom nach Synchronisationssequenzen gesucht wird und bei Auffinden derselben Rahmengrenzen und Wortgrenzen definiert sind, womit ein synchroner Zustand hergestellt ist,
**dadurch gekennzeichnet,**
daß bei Verlust der Synchronität wiederum anhand der mitübertragenen Synchronisationssequenzen synchronisiert wird, wobei zunächst nach Maßgabe einer Steuereinrichtung lediglich diejenigen Synchronisationssequenzen berücksichtigt werden, die wortsynchron zu den Rahmengrenzen des vorherigen synchronen Zustandes sind.

2. Verfahren nach Anspruch 1,
**dadurch gekennzeichnet,**
daß das Herstellen des synchronen Zustandes dadurch erfolgt, indem empfangsseitig in dem ankommenden Bitstrom Synchronisationssequenzen gesucht werden, die mit sendeseitig mitübertragenen Synchronisationssequenzen verglichen werden, und bei Vorliegen einer Übereinstimmung eine vorläufige Rahmengrenze definiert ist, die durch die Verknüpfung mit einer in der Synchronisationssequenz enthaltenen Information dann als endgültig angesehen wird, wenn das Ergebnis der Verknüpfung zu wenigstens einer weiteren Rahmengrenze führt.

3. Verfahren nach Anspruch 1, 2,
**dadurch gekennzeichnet,**
daß die Synchronisationssequenz aus der über ein Paket gebildeten Paketlänge (L) und einer über die Paketlänge (L) gebildeten Prüfinformation (FC) gebildet ist.

4. Verfahren nach Anspruch 1 bis 3,
**dadurch gekennzeichnet,**
daß die Verknüpfung als Beaufschlagung der vorläufige Rahmengrenze mit der über dem eingefügten Paket gebildeten Paketlänge (L) definiert ist.

5. Verfahren nach Anspruch 1 bis 4,
**dadurch gekennzeichnet,**
daß die Synchronität solange gegeben ist, bis die Beaufschlagung der zuletzt ermittelten Rahmengrenze mit der Paketlänge (L) nicht mehr zur nächsten Rahmengrenze führt.

6. Verfahren nach einem der Ansprüche 1 bis 5,
**dadurch gekennzeichnet,**
daß die Steuereinrichtung als Zähleinrichtung ausgebildet ist, die bei Ablauf (4-1, 5-1) unmittelbar eine Neusynchronisierung (1) bewirkt.

7. Verfahren nach einem der Ansprüche 1 bis 5,
**dadurch gekennzeichnet,**
daß die Steuereinrichtung als Timer ausgebildet ist, der bei Ablauf (4-1, 5-1) unmittelbar eine Neusynchronisierung (1) bewirkt.

8. Verfahren nach einem der vorstehenden Ansprüche,
**dadurch gekennzeichnet,**
daß die Prüfinformation (FC) ein CRC-Prüfverfahren und/ oder ein BIP-Prüfverfahren ist.

9. Verfahren nach einem der vorstehenden Ansprüche,
**dadurch gekennzeichnet,**
daß die Synchronisierungsvorgänge in einer Mehrzahl von empfangsseitig angeordneten, parallel arbeitenden Synchronisationsvorrichtungen nach Maßgabe der Steuerung einer übergeordneten Steuervorrichtung erfolgen.

10. Verfahren nach einem der vorstehenden Ansprüche,
**dadurch gekennzeichnet,**
daß die sendenden und empfangenden Einrichtungen als Router-Einrichtungen ausgebildet sind.

11. Verfahren nach einem der vorstehenden Ansprüche,
**dadurch gekennzeichnet,**
daß ein Wort als ein Byte ausgebildet ist.
